# EUROPEAN PATENT APPLICATION

(11) **EP 4 736 613 A1**
(43) Date of publication of application: **06.05.2026**
(21) Application number: 25202439.3
(22) Date of filing: 16.09.2025
(51) Int. Cl.: A01C 7/04

(54) **SEED METER ASSEMBLY**

(30) Priority: 31.10.2024 US 202463714425 P; 28.08.2025 US 202519313390
(71) Applicant: Deere & Company, Moline, IL 61265 (US)
(72) Inventor: Garner, Elijah B., Mannheim (DE); Zumdome, Lee E., Mannheim (DE)
(74) Representative: Reichert, Christian

(57) **Abstract**

A seed meter assembly (24) for an agricultural planting machine (10) is disclosed. The seed meter assembly (24) comprising: a seed meter housing (32); a seed metering member (26) rotatably mounted with respect to the seed meter housing (32), wherein a point (64) on the seed metering member (26) is rotatable within a plane (38) about a meter axis (A) normal to the plane (38); and a ramp surface (60) inclined relative to the plane (38), the ramp surface (60) disposed within one seed-length (82) of a seed side (50) of the seed metering member (26), the ramp surface (60) configured to be engaged and followed by seeds (70) adhered to the seed metering member (26) as the seed metering member (26) rotates with respect to the ramp surface (60).

## Description

### TECHNICAL FIELD

The present disclosure relates generally to an agricultural planting machine, such as a row crop planter for agricultural applications. The disclosure also relates to a seed meter assembly for the agricultural planting machine.

### BACKGROUND

Seed meters are used for singulating and metering seeds for planting. A plurality of seed meters may be mounted to an agricultural planting machine for planting more than one row of crop at a time.

### SUMMARY

In some circumstances, it may be desirable to guide the metered seeds into a certain orientation that may better position the metered seeds for transition into a seed delivery mechanism. The desired seed orientation may be encouraged by the use of a ramp in the seed meter housing. For example, seeds having elongated shapes (e.g., edible beans, other beans, peanuts, corn, cotton, sunflower, and others that are longer than they are wide and/or deep) may be reoriented using the seed ramp such that the seed can be taken long-edge-first into the seed delivery mechanism. This orientation may facilitate a more centered disposition of the seed within the seed delivery mechanism such that the seeds are released from the seed delivery mechanism in a more centered and/or predictable location. Thus, the ramp may provide improved seed delivery with less variation in the position of the emerging seed relative to the seed delivery mechanism.

In one aspect, the disclosure may relate to a seed meter assembly having a ramp surface for guiding seeds into a desired orientation.

According to an aspect of the present disclosure, a seed meter assembly for an agricultural planting machine may include a seed meter housing defining a gullet operable to receive a portion of a seed delivery mechanism, and a seed metering member rotatably mounted with respect to the seed meter housing. The seed metering member may define a plurality of apertures operable to adhere seeds by pressure differential. A point on the seed metering member may be rotatable within a plane about a meter axis normal to the plane. A ramp surface may be fixed relative to the seed meter housing. The ramp surface may be inclined relative to the plane. The ramp surface may be disposed on a seed side of the seed metering member and within one seed-length of the seed side of the seed metering member. A distance between the ramp surface and a target on the seed side decreases as the ramp surface rises away from the plane. The distance may be defined generally parallel to the seed side of the seed metering member. The ramp surface may be configured to be engaged and followed by seeds adhered to the seed metering member as the seed metering member rotates with respect to the ramp surface in such a way that the seeds are rotated towards the target.

According to another aspect of the present disclosure, a seed meter assembly for an agricultural planting machine may include a seed meter housing, and a seed metering member rotatably mounted with respect to the seed meter housing. A point on the seed metering member may be rotatable within a plane about a meter axis normal to the plane. A ramp surface may be inclined relative to the plane. The ramp surface may be disposed within one seed-length of a seed side of the seed metering member. The ramp surface may be configured to be engaged and followed by seeds adhered to the seed metering member as the seed metering member rotates with respect to the ramp surface. According to yet another aspect of the present disclosure, a seed meter assembly for an agricultural planting machine may include a ramp surface, and a seed metering member rotatably mounted with respect to the ramp surface. The ramp surface may be inclined in such a way as to be engaged and followed by a seed adhered to the seed metering member as the seed metering member rotates with respect to the ramp surface, and such that an orientation of the seed with respect to a seed side of the seed metering member is changed before the seed is removed from the seed metering member.

Other features and aspects will become apparent by consideration of the detailed description, claims, and accompanying drawings.

### BRIEF DESCRIPTION OF THE DRAWINGS

The detailed description of the drawings refers to the accompanying figures.
FIG. 1 is a top view of an agricultural planting machine having a plurality of row units.
FIG. 2 is a perspective exploded view of a seed meter assembly of one of the row units of the agricultural planting machine of FIG. 1.
FIG. 3 is a perspective cross-sectional view of a portion of the seed meter assembly of FIG. 2 taken through line 3-3 in FIG. 2.
FIG. 4 is a schematic illustration of a seed meter ramp and seed metering member of the seed meter assembly of FIG. 3.
FIG. 5 is a schematic illustration of the seed metering member of the seed meter assembly of FIG. 2 passing metered seeds to a seed delivery mechanism.
FIG. 6 is a schematic illustration of a seed being reoriented while adhered to the seed metering member.

Like reference numerals may be used to indicate like elements throughout the several figures.

### DETAILED DESCRIPTION

Before any implementations of the disclosure are explained in detail, it is to be understood that the disclosure is not limited in its application to the details of construction and the arrangement of components set forth in the following description or illustrated in the accompanying drawings. The disclosure is capable of supporting other implementations and of being practiced or of being carried out in various ways.

In the Detailed Description herein, references to an "implementation," an "aspect," and an "example," etc., indicate that the implementation described may include a particular feature, structure, or characteristic, but every implementation may not necessarily include the particular feature, structure, or characteristic. Moreover, such phrases are not necessarily referring to the same implementation. Further, when a particular feature, structure, or characteristic may be described in connection with an implementation, it may be submitted that it may be within the knowledge of one skilled in art to affect such feature, structure, or characteristic in connection with other implementations whether or not explicitly described.

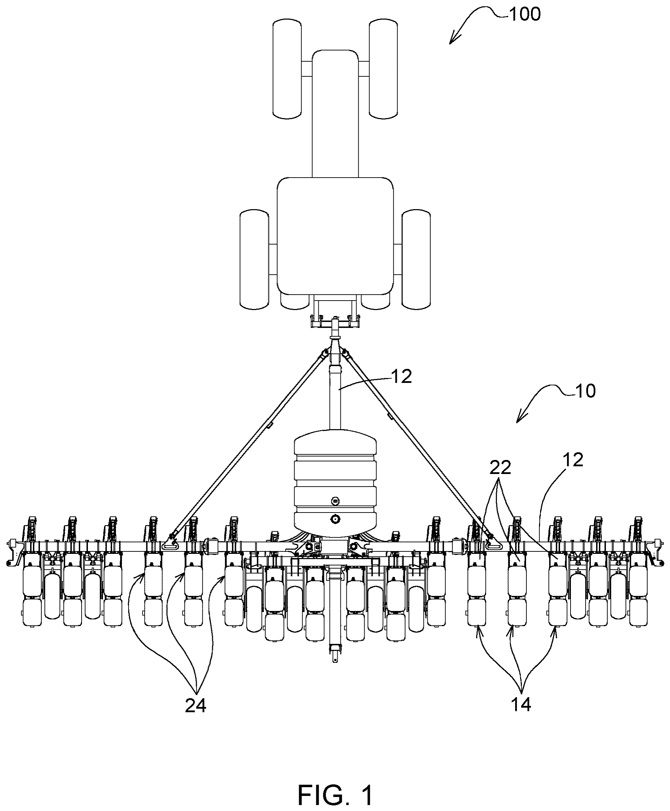

FIG. 1 illustrates an agricultural planting machine 10, such as a row crop planter, pulled by a vehicle 100, such as a tractor. The agricultural planting machine 10 may have a frame 12 on which there may be mounted one or more individual row units 14.

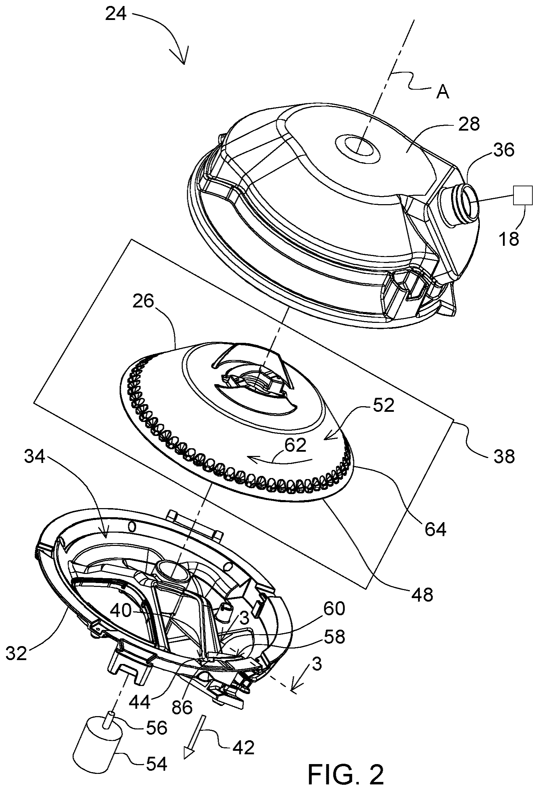

Each row unit 14 may have a row unit frame 22 to which the components of the row unit 14 are mounted. Each row unit frame 22 may be mounted to the frame 12. A seed meter assembly 24 having one or more seed metering members 26 (FIG. 2) or wheels is coupled to each row unit frame 22. The seed meter assembly 24 is coupled to the seed source 16 by way of the conduits 20. The seed meter assembly 24 may have one, two, three or more seed metering members 26 coupled to each row unit frame 22. The seed metering member 26 may be a disc, bowl, or other structure configured to meter and or singulate seed, e.g., picked up or taken or received from a seed pool or puddle in the seed meter assembly.

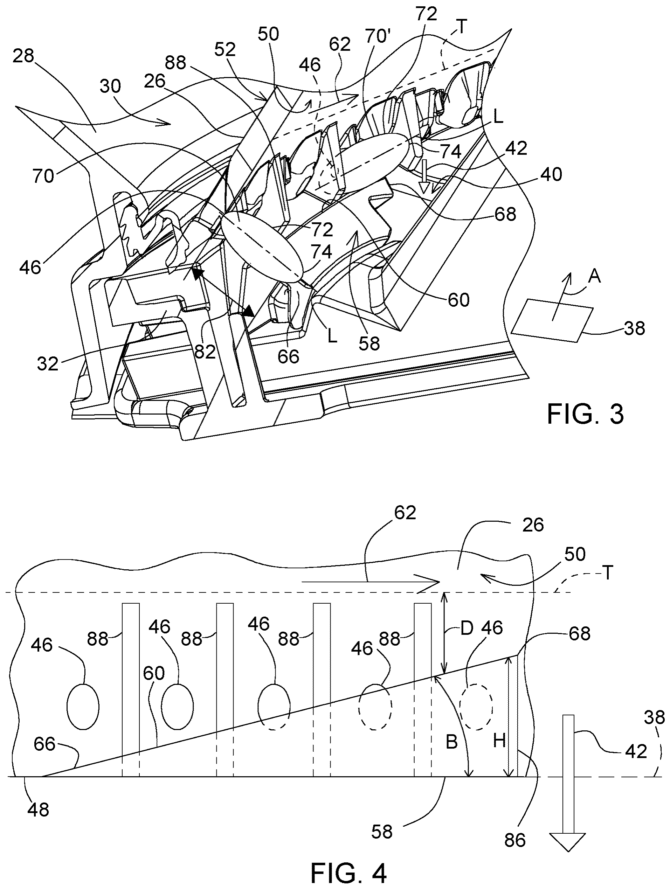

As illustrated in FIG. 2, the seed meter assembly 24 may include a pressure chamber housing 28 defining a pressure chamber 30 (FIG. 3). The pressure chamber housing 28 may facilitate maintaining an air pressure that is different from the ambient environment (an air pressure differential) while a pressure differential delivery apparatus 18 is activated. The pressure differential delivery apparatus 18 may include a hose or other conduit that is fluidly connected to a vacuum pump, a compressor, or the like. The pressure may be positive or negative relative to the ambient environment. In the illustrated examples, there is negative pressure in the pressure chamber 30 for pulling the seeds onto the seed metering member 26. In other examples, the seed meter assembly 24 may be configured for positive pressure to push the seeds into the seed metering member 26. The pressure chamber housing 28 may include a pressure conduit connector 36 for connecting to the pressure differential delivery apparatus 18. The pressure chamber housing 28 may be fluidly coupled to the pressure differential delivery apparatus 18.

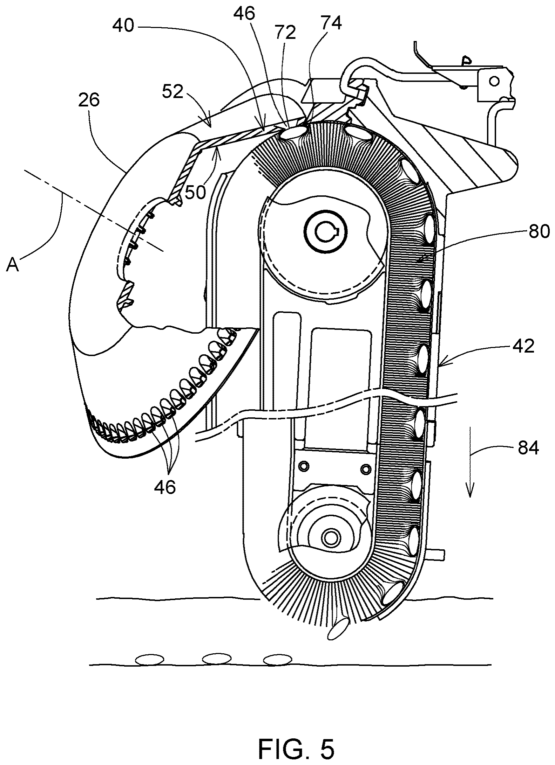

The seed meter assembly 24 may include a seed meter housing 32. The seed meter housing 32 may at least partially define a seed reservoir 34 for holding seeds to be metered. The seed metering member 26 may rotate at least partially within the seed reservoir 34 to pick up seeds from the seed reservoir 34 using a pneumatic force of the air pressure differential. The seed metering member 26 may be rotatably mounted with respect to the seed meter housing 32. The seed meter housing 32 may define a gullet 40 (FIG. 2) allowing a metered seed from the seed metering member 26 to pass from the seed meter housing 32 to a seed delivery mechanism 42 (illustrated schematically with an arrow in FIGS. 2-4 and one example thereof illustrated in more detail in FIG. 5) located downstream of the seed meter assembly 24. "Downstream" is defined with respect to a travel path 84 (FIG. 5) of the seeds, where "downstream" is the direction in which the seeds are headed (the travel path 84) and "upstream" is the direction from which the seeds have come (opposite the travel path 84). The gullet 40 may be defined by an opening or recess that receives a portion of the seed delivery mechanism 42 (FIG. 5). The gullet 40 may be bounded by at least one wall 44 in the seed meter housing 32.

FIG. 5 illustrates an example of the seed delivery mechanism 42 receiving seeds from the seed metering member 26. The seed delivery mechanism 42 may include an endless member(s) or a pneumatic delivery device. One, two, or more endless member(s) may be employed to receive seeds from the seed metering member 26. An endless member may include a continuous loop belt or continuous loop conveyor. As one example, the seed delivery mechanism 42 may include an endless member embodied as a continuous loop brush belt 80, as illustrated in FIG. 5. The gullet 40 may receive a portion of the brush belt 80. The brush belt 80 may receive seeds from the seed metering member 26 in the gullet 40. Other examples of an endless member may include a pocketed belt, a textured belt, a belt having other textural surfaces, other types of belts, conveyors, etc. Examples of a pneumatic delivery device may include a tube having pressurized air therein.

The seed metering member 26 takes seeds from the seed reservoir 34 (FIG. 2) and sequentially discharges metered seeds (e.g., singulated seeds) to the downstream seed delivery mechanism 42 which deposits the seeds onto a soil surface (e.g., a furrow as shown in FIG. 5). The seeds may be delivered one at a time, for example. The air pressure (e.g., a vacuum) exerts a pneumatic force that acts to adhere seeds to the seed metering member 26. The seed metering member 26 may be in the form of a disk, a bowl, a drum, etc., or any other suitable rotatable seed-adhering geometry. The seed metering member 26 may have apertures 46 that extend therethrough. The apertures 46 are generally arranged to encircle a meter axis A. The apertures 46 may be disposed proximate a circumferential edge 48 of the seed metering member 26. The apertures 46 may pass through the seed metering member 26 from a seed side 50 to a pressure side 52 (FIG. 5). The seed side 50 may be opposite the pressure side 52. The seed side 50 may face the seed reservoir 34. The seed side 50 may have direct contact with seeds. The pressure side 52 may face the pressure chamber 30 defined by the pressure chamber housing 28. Thus, by way of the apertures 46, the seed reservoir 34 may be in fluid communication with the pressure chamber 30 such that the pressure (e.g., a vacuum) in the pressure chamber 30 may act on the seeds in the seed reservoir 34 to adhere the seeds to the seed metering member 26. In some examples, a positive pressure may be configured to push the seeds into the seed metering member 26.

The seed metering member 26 may be driven to rotate by a drive mechanism 54 (illustrated schematically in FIG. 2), such as an electric motor, a hydraulic motor, a ground wheel or other rotating component that may be mechanically coupled to drive the seed metering member 26, or by any other suitable drive mechanism. The drive mechanism 54 may be configured to drive the seed metering member 26 about the meter axis A via a drive shaft 56 defining the meter axis A. The seed metering member 26 may be coupled to the drive shaft 56 such that the drive shaft 56 and the seed metering member 26 rotate together as a unit relative to the seed meter housing 32 and the pressure chamber housing 28. The seed meter housing 32 and the pressure chamber housing 28 are stationary (e.g., not driven by the drive mechanism 54). A point 64 on the seed metering member 26 rotates in a plane 38 about the meter axis A where the meter axis A is normal to the plane 38. The plane 38 may be defined by the ideal rotational path of any point on the seed metering member 26 as it rotates about axis A. As one example, the plane 38 may be defined by the ideal rotational path of the point 64, where the point 64 is at or near the circumferential edge 48 of the seed metering member 26 as the point 64 rotates about the meter axis A. The point 64 may be below the apertures 46 (as shown in the view of FIG. 4). The plane 38 may be referred to as a "rotational plane" of the seed metering member 26.

Turning to FIG. 3, a ramp surface 60 may be fixed relative to the seed meter housing 32 in any suitable fashion. For example, the ramp surface 60 may be attached or fastened with respect to the seed meter housing 32 (directly or indirectly to the seed meter housing 32) or formed monolithically therewith. The ramp surface 60 may be disposed adjacent the gullet 40. The ramp surface 60 may be disposed directly adjacent the gullet 40. The ramp surface 60 may be spaced from the gullet 60. The ramp surface 60 may be upstream of the gullet 40. The ramp surface 60 (as illustrated schematically in FIG. 4) may be defined by any suitable seed slide structure, such as a planar surface, a curved surface, a helical surface, a wedge, a wire, an edge, and/or a rail. The ramp surface 60 may be smooth or serrated or undulating, etc. The ramp surface 60 may be made including a rigid, flexible, and/or at least semi-flexible material. As one example, the ramp surface 60 may be defined by a ramp block 58 (FIG. 3), which may be configured generally as a wedge, and the ramp surface 60 may be an edge on the ramp block 58 (see FIG. 3). Thus, the ramp block 58 may include at least the ramp surface 60. At a distal end of the ramp surface 60 (e.g., at the higher end 68 described below), a surface 86 (FIGS. 2 and 4) may be defined that bounds the gullet 40. In other examples, the surface 86 may be upstream of the gullet 40, spaced from the gullet 40, and facing downstream (e.g., facing in the same direction as the seed travel path 84) towards the gullet 40. In the ramp block example, the surface 86 may be defined by a side of the ramp block 58. As another example, the ramp surface 60 may include a flexible and/or semi-flexible material, which may be different from the material from which the seed meter housing 32 is made. The flexible and/or semi-flexible ramp surface 60 may be fixed relative to the seed meter housing 32 in any suitable fashion, such as by attachment to the seed meter housing 32, directly or indirectly.

The ramp surface 60 may be disposed radially inwards of the seed metering member 26. "Radially" may be defined relative to the meter axis A. The ramp surface 60 may be disposed on the seed side 50 of the seed metering member 26. The ramp surface 60 may be disposed on the seed side 50 of the seed metering member 26 and radially inwards of the seed side 50 of the seed metering member 26. The ramp surface 60 may be disposed within one seed-length 82 of the seed metering member 26. The ramp surface 60 may be disposed within one seed-length 82 of the seed side 50 of the seed metering member 26. The ramp surface 60 may be spaced farther away from the seed side 50 than the full radial extent of any paddles 88 that extend radially from the seed side 50 proximate the apertures 26. Thus, the ramp surface 60 may be spaced at least one paddle-length away from the seed side 50. The ramp surface 60 may be spaced more than one paddle-length away from the seed side 50. Such spacing of the ramp surface 60 from the seed side 50 avoids interference between the ramp surface 60 and the paddles 88. The paddles 88 may extend radially inwards towards the meter axis A. The paddles 88 may extend from the seed side 50 proximate the apertures 26. The paddles 88 may separate seeds adhered to the seed side 50.

It should be understood that the seed meter assembly 24 may be used for different types of seeds, beans, legumes, corn, cotton, sunflower, etc., each type having their own range of lengths and average length which may differ from one type to the next. The seed-length 82 is defined by the longitudinal length of the seed (e.g., the longest length of the seed). Thus, in some examples, the seed-length 82 may be defined by the average seed-length for the particular type of seed being metered. It should also be understood that there may be variation in seed length within each type of seed (a range of lengths), and in some examples, only the longer seeds in each seed type are to be reoriented while shorter seeds may not be reoriented. Thus, the seed-length 82 may be defined by any desired pre-defined seed-length. Seeds shorter than the pre-defined seed-length may not be reoriented. In some examples, the seed-length 82 may be defined by the shortest seed-length for the particular type of seed being metered (e.g., such that all seeds of that type are reoriented). The distance of the ramp surface 60 away from the seed side 50 of the seed metering member 26 may be less than the seed-length 82 of the shortest seed that should be reoriented, and this way the same system can work for many different seed sizes and shapes.

For example, a seed-length 82 may generally fall within about 0.3 cm (0.1 inches) to 5.1 cm (2 inches), or about 0.5 cm (0.2 inches) to 3 cm (1.2 inches), or about 0.5 cm (0.2 inches) to 2 cm (0.8 inches), or about 1 cm (0.4 inches) to 3 cm (1.2 inches), or about 1 cm (0.4 inches) to 2 cm (0.8 inches), etc. In other examples, a seed-length 82 may have other values depending on the type of seed or bean or legume being metered. For example, kidney beans have an average seed-length 82 falling within about 1.0 cm (0.4 inches) to about 1.8 cm (0.8 inches).

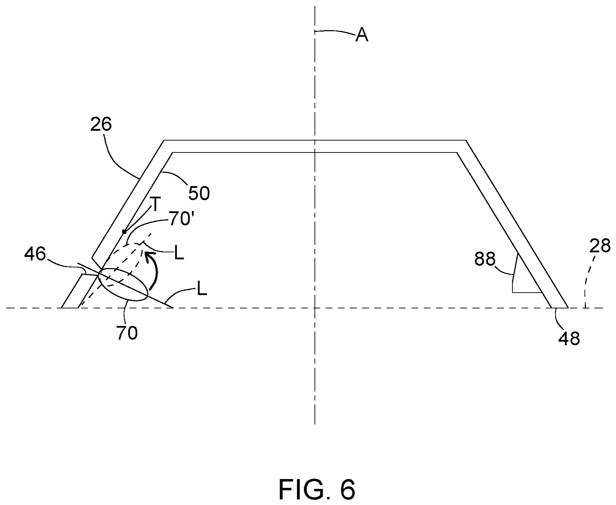

As best illustrated schematically in FIG. 4, the ramp surface 60 may be inclined relative to the plane 38. The ramp surface 60 may define an angle B with respect to the plane 38. The angle B may be between about 5 and 45 degrees. More specifically, the angle B may be between about 10 and 40 degrees. Even more specifically, the angle B may be between about 15 and 35 degrees. Even more specifically, the angle B may be between about 15 and 30 degrees. In general, the ramp surface 60 has a height H equal to or less than the seed-length 82. In the illustrated example, the height H is less than the seed-length 82 when measured from the point at which the longest axis of the shortest seed that needs to be rotated is roughly perpendicular to the seed side 50 surface of the seed metering member 26, and the distance H is less than the shortest seed that needs to be rotated. For example, the height H may be about 0.3 cm (0.1 inches) to 5.1 cm (-2 inches), or about 0.5 cm (0.2 inches) to 3 cm (1.2 inches), or about 0.5 cm (0.2 inches) to 2 cm (0.8 inches), or about 1 cm (0.4 inches) to 3 cm (1.2 inches), or about 1 cm (0.4 inches) to 2 cm (0.8 inches), etc. Although some examples are given, the ramp surface 60 may have any suitable angle B and height H to rotate an elongated seed 70 towards laying its long edge 72 flat against the seed side 50 of the seed metering member 26 (see FIG. 6). The ramp surface 60 may operate to rotate an elongated seed 70 towards a target T on the seed side 50 of the seed metering member 26 (see FIGS. 4 and 6). Rotation of the elongated seed 70 towards the target T may be best illustrated in FIG. 6, with an unrotated seed denoted as 70 and a rotated seed denoted as 70'. The target T may be above the apertures 46 as viewed in FIG. 4. The apertures 46 may be between the plane 38 and the target T. The target T may be a ring around the seed side 50 of the seed metering member 26, or any other suitable geometry depending on the geometry of the seed metering member 26. The target T may be a target on the seed side 50 towards which the seed 70 is rotated in order to orient the longitudinal axis L of the seed 70 closer to parallel with the seed side 50, as illustrated in FIGS. 3 and 6. The seed 70 may be rotated away from the plane 28. The seed 70 may remain adhered to a contact area proximate its respective aperture 46 as it rotates. Thus, the seed 70 may pivot generally about its respective contact area proximate its respective aperture 46.

The ramp surface 60 may lead up to the surface 86. The ramp surface 60 may intersect the surface 86. The ramp surface 60 may be generally straight). The ramp surface 60 may be straight. The ramp surface 60 may be curved rather than straight. The ramp surface 60 may be generally helical. The ramp surface 60 may be helical. A distance D between the ramp surface 60 and the target T may decrease as the ramp surface 60 rises away from the plane 38, as may be best illustrated in FIG. 4. At least a component of the rise of the ramp surface 60 rises away from the plane 38. The distance D may be measured generally parallel to the seed side 50 of the seed metering member 26 (as illustrated schematically in FIGS. 4 and 6). The ramp surface 60 may rise from a lower end 66 of the ramp surface 60 closer to the plane 38 to a higher end 68 of the ramp surface 60 farther from the plane 38 than the lower end 66. The distance D may be an axial distance extending and measured generally parallel to the seed side 50 of the seed metering member 26, though at least a component of the distance D may also be measured generally parallel to the meter axis A. A direction 62 in which the seed metering member 26 rotates relative to the ramp surface 60 is illustrated in FIGS. 3-4. The ramp surface 60 (or at least a component of the rise thereof) may rise away from the plane 38 in the direction 62 of seed metering member 26 rotation. Stated a different way, the ramp surface 60 may rise away from the plane 38 in the downstream direction of seed travel such that the ramp surface 60 rises as the seed 70 moves downstream. As illustrated schematically in FIG. 4, the ramp surface 60 may begin (e.g., at the lower end 66) below the apertures 46 and end (e.g., at the higher end 68) proximate or above the apertures 46. As best illustrated in FIG. 6, this geometry allows a seed 70 following the ramp surface 60 to be rotated from having its longitudinal axis L closer to perpendicular with the seed side 50 of the seed metering member 26 to closer to parallel (70') with the seed side 50 of the seed metering member 26.

In operation, the ramp surface 60 acts as a cam that is engaged and followed by the seed 70 (FIG. 3) as the seed 70 revolves with the seed metering member 26 about the meter axis A. Thus, the seed 70 is reoriented. FIGS. 3 and 6 illustrate the seed 70 in a first position in which the seed 70 may be oriented with its longitudinal axis L relative to the seed metering member 26, and in a second position in which the seed (labeled as 70' in the second position) may be oriented with its longitudinal axis L closer to parallel to the seed metering member 26 (e.g., closer to parallel to the portion of the seed metering member 26 directly adjacent the seeds, such as the seed side 50 of the seed metering member 26 directly adjacent the seeds) than in the first position. The seed may be oriented in the second position (labeled as 70' in the second position) with its longitudinal axis L closer to parallel to the meter axis A than in the first position. The seed may be oriented in the second position (labeled as 70' in the second position) with its longitudinal axis L closer to perpendicular to the plane 38 than in the first position. The seed may be oriented in the second position (labeled as 70' in the second position) with its longitudinal axis L closer to parallel to the seed side 50 of the seed metering member 26 (or with its long side 72 closer to flat against the seed side 50 of the seed metering member 26) than in the first position. In some examples, this reorientation may put the long edge 72 of the seed 70' in a position to be received by the seed delivery mechanism 42 (as illustrated in FIG. 5) rather than the short edge 74 of the seed 70. In other examples, the ramp surface 60 may reorient the seed 70 into other positions.

## Claims

1. A seed meter assembly (24) for an agricultural planting machine (10), comprising:
a seed meter housing (32);
a seed metering member (26) rotatably mounted with respect to the seed meter housing (32), wherein a point (64) on the seed metering member (26) is rotatable within a plane (38) about a meter axis (A) normal to the plane (38); and
a ramp surface (60) inclined relative to the plane (38), the ramp surface (60) disposed within one seed-length (82) of a seed side (50) of the seed metering member (26), the ramp surface (60) configured to be engaged and followed by seeds (70) adhered to the seed metering member (26) as the seed metering member (26) rotates with respect to the ramp surface (60).

2. The seed meter assembly (24) of claim 1, wherein the seed metering member (26) defines a plurality of apertures (46) operable to adhere seeds (70) by pressure differential, wherein a distance (D) between the ramp surface (60) and a target (T) on the seed side (50) decreases as the ramp surface (60) rises away from the plane (38).

3. The seed meter assembly (24) of claim 1 or 2, wherein the seed meter housing (32) defines a gullet (40) operable to receive a portion of a seed delivery mechanism (42), wherein the ramp surface (60) leads up towards the gullet (40).

4. The seed meter assembly (24) of one of the claims 1 to 3, wherein the ramp surface (60) is defined by a ramp block (58), and wherein the ramp block (58) further includes a surface (86) bounding the gullet (40).

5. The seed meter assembly (24) of one of the claims 1 to 4, wherein the ramp surface (60) is defined by at least one of a planar surface, a curved surface, a helical surface, a wedge, a wire, an edge, or a rail.

6. The seed meter assembly (24) of one of the claims 1 to 5, wherein the ramp surface (60) is configured to reorient the seeds (70) to have their longitudinal axis (L) closer to parallel with the seed side (50) of the seed metering member (26).

7. The seed meter assembly (24) of one of the claims 1 to 6, wherein the ramp surface (60) is in a fixed position with respect to the seed meter housing (32).

8. The seed meter assembly (24) of one of the claims 1 to 7, wherein the ramp surface (60) is formed monolithically with the seed meter housing (32).

9. The seed meter assembly (24) of one of the claims 2 to 8, wherein the distance (D) is measured generally parallel to the seed side (50), wherein the ramp surface (60) is configured to rotate the seed towards the target (T).

10. The seed meter assembly (24) of one of the claims 3 to 9, wherein the ramp surface (60) bounds the gullet (40).
